# EUROPÄISCHE PATENTSCHRIFT

(11) **EP 1 949 948 B1**
(45) Veröffentlichungstag und Bekanntmachung des Hinweises auf die Patenterteilung: **26.01.2011**
(21) Anmeldenummer: 08001577.9
(22) Anmeldetag: 29.01.2008
(51) Int. Cl.: B01D 29/23, B01D 35/12, B01D 37/02

(54) **Vorrichtung und Verfahren zur kontinuierlichen Behandlung von Flüssigkeiten**
Method and device for continuous processing of fluids
Dispositif et procédé destinés au traitement continu de liquides

(30) Priorität: 29.01.2007 CH 1382007
(43) Veröffentlichungstag der Anmeldung: 30.07.2008
(73) Patentinhaber: Kiefer, Johannes, 9030 Abtwil (CH); Saladin, Patric, 9030 Abtwil (CH)
(72) Erfinder: Kiefer, Johannes, 9030 Abtwil (CH); Saladin, Patric, 9030 Abtwil (CH)
(74) Vertreter: Castell, Klaus

(56) Entgegenhaltungen:
- WO-A-00/18497
- WO-A-01/58566
- DE-A1- 4 237 714
- US-A- 5 670 038

## Beschreibung

Die vorliegende Erfindung betrifft eine Vorrichtung und ein Verfahren zur kontinuierlichen Behandlung von Flüssigkeiten. Die Erfindung betrifft insbesondere die Behandlung von Lösungen und flüssigen Stoffgemischen durch Zusatz von in der Lösung oder dem Stoffgemisch unlöslichen Behandlungsmitteln und deren quantitativer Abtrennung in einem kontinuierlich zu betreibenden Filtersystem. Mit der Behandlung werden Stoffe oder Stoffgruppen, die die angestrebten Produkteigenschaften negativ beeinflussen können, selektiv ganz oder teilweise entfernt und/oder umgeformt.

Eine mögliche Anwendung betrifft die Verbesserung der Haltbarkeit von Bier durch Entfernung eines der Reaktionspartner zur Bildung von sogenannten Kälte- oder Dauertrübungen. Derzeit werden polyphenolische Verbindungen und bestimmte Proteinfraktionen als mögliche auslösende Stoffgruppen betrachtet. In der Folge sollen Anwendungsbeispiele aus der Getränkeindustrie den Stand der Technik und die Aufgabenstellung verdeutlichen.

Die Verbrauchererwartung an Produkte der Getränkeindustrie umfasst neben den sensorischen Produkteigenschaften auch visuelle Parameter wie z.B. die Klarheit bei nicht als naturtrüb deklarierten Artikeln. Diesem Anspruch wird in der Regel durch ein mehrstufiges Behandlungsverfahren Rechnung getragen. Die einzelnen Stufen beinhalten dabei in der Regel eine Klärung, die wiederum mehrstufig sein kann, sowie zur Absicherung der erreichten Klarheit eine sogenannte Stabilisierung, bei der mögliche Reaktionspartner einer sekundären Trübungsbildung selektiv entfernt werden.

Der Filtrationsschritt wird häufig mittels einer Anschwemmfiltration, einer Tiefenfiltration oder immer häufiger mit einer sogenannten Membranfiltration durchgeführt. Membranfiltrationen können durch eine geeignete Wahl der Anlagenkonfiguration sehr wirtschaftlich in einer kontinuierlichen oder quasikontinuierlichen Weise betrieben werden.

Für den Prozessschritt der Stabilisierung stehen bisher keine Technologien zur Verfügung, die es erlauben, den gesamten Strom des im Filtrationsschritt erzeugten Produktes kontinuierlich weiter zu behandeln.

Als typische Stabilisierungsverfahren werden derzeit unterschiedlichste Technologien eingesetzt. Diese können grob unterteilt werden in Methoden mit verlorenen Stabilisierungsmitteln, Methoden mit der Möglichkeit zur Regeneration der Stabilisierungsmittel und Methoden, die die Entstehung der für die Trübungsbildung verantwortlichen Stoffgruppen bereits in einem vorgelagerten Prozessschritt unterdrücken oder reduzieren. Hier sei der Einsatz spezifischer Enzyme wie Proteasen, Glucanasen oder Polyphenoloxidasen erwähnt.

Verlorene Stabilisierungsmittel sind z.B. Bentonite, Kieselgele, Aktivkohle oder Polyvinylpolypyrrolidon (PVPP). Diese verlorenen Stabilisierungsmittel werden in der Regel vor oder im Klärschritt wieder aus dem Produkt entfernt. Nachteilig ist dabei, dass diese Stabilisierungsmittel im Klärschritt die zur Verfügung stehende Kapazität der Kläreinrichtungen und damit die Wirtschaftlichkeit von deren Betrieb reduzieren. Eine Entfernung vor dem Klärschritt bedingt in der Regel zusätzliche technische Einrichtungen.

Speziell für den Fall eines Klärschritts über eine Membranfiltration gilt, dass der Eintritt bestimmter Stabilisierungsmittel in das Filtersystem dessen Filtercharakteristik dauerhaft verschlechtern kann. Die Verwendung bestimmter verlorener Stabilisierungsmittel in Verbindung mit Membranfiltersystemen ist somit technisch wie wirtschaftlich nicht sinnvoll.

Die Verwendung regenerierbarer Stabilisierungsmittel bedingt in der Regel einen großen apparativen Aufwand, da die gesamte für einen wirtschaftliche Chargengröße erforderliche Menge an Stabilisierungsmitteln innerhalb des Systems gepuffert werden muss. Daraus ergeben sich entsprechende Anlagengrößen. Eine typische technische Ausführung einer Verwendung regenerierbarer Stabilisierungsmittel sind die in der Bierindustrie verwendeten PVPP-Anlagen. Diese bestehen in der Regel aus einem Filter mit einem geschlossenen Filterkessel, den erforderlichen Dosiereinrichtungen, einem Stapel- und Vorlagebehälter für das regenerierte PVPP und einer für die Regeneration erforderlichen Reinigungseinheit. Mit einer solchen Anlage ist es problemlos möglich, die Stabilisierung im sogenannten Vollstrom, d.h. 100 % der zu stabilisierenden Flüssigkeit kommen in Kontakt mit dem Stabilisierungsmittel, durchzuführen. Dabei wird das Stabilisierungsmittel dem Produktstrom in einer dem gewünschten Stabilisierungseffekt entsprechenden Menge über die Dosiereinrichtung zugegeben. Es kann daher davon ausgegangen werden, dass das gesamte Produkt gleichmäßig mit dem Stabilisierungsmittel in Kontakt kommt und gleichmäßig stabilisiert wird. Nachteilig in solchen Anlagen ist das große Produktvolumen von etwa 5 bis 15 % der stündlichen Leistung. Damit führen Produktwechsel zu Verschnitten einzelner Produkte miteinander. Diese Mischungen sind in der Praxis unerwünscht. Mögliche Ausführungen sind beschrieben in DE 26 48 978 A1 oder in EP 1 000 648 A1.

Durch die Verwendung von Filterkesseln mit einer gegebenen Größe kann in einer bestehenden PVPP-Anlage nur innerhalb enger Grenzen auf unterschiedliche Chargengrößen oder auf Änderungen des zu produzierenden Volumenstroms eingegangen werden. Nachteilig ist ebenfalls, dass bei einer kontinuierlichen Betriebsweise des Filtrationsschritts über eine Membranfiltrationsanlage mindestens zwei PVPP-Anlagen vorhanden sein müssen, um während der Regeneration des Stabilisierungsmittels die Membranfiltrationsanlage weiter betreiben zu können. Aus wirtschaftlichen Gründen wird diese Konfiguration von Anlagenbetreibern nicht gewählt.

Es sind auch Bauformen bekannt, bei denen stabilisierungsmittelhaltige Filtermedien wie z.B. Filterschichten eingesetzt werden. Dabei wird die gesamte Menge an Stabilisierungsmittel bereits bei Beginn des Produktlaufs mit dem zu stabilisierenden Produkt in Verbindung gebracht. Nachteilig ist dabei, dass die stabilisierende Wirkung dieser Medien mit zunehmender Betriebsdauer abnimmt, da die möglichen Reaktionsstellen des Stabilisierungsmittels immer stärker abgesättigt werden und keine Dosierung frischen Stabilisierungsmittels erfolgt. Als Notbehelf wird in solchen Anlagen eine sogenannte Verschnittkurve erstellt, bei der das am Beginn der Produktion überstabilisierte Produkt in abnehmender Menge mit nicht stabilisiertem Produkt verschnitten wird, um eine mittlere Stabilisierung zu erreichen. Da die für die sekundäre Trübungsbildung verantwortlichen Reaktionspartner aber eine unterschiedliche chemische Reaktivität aufweisen, verbleiben bei dieser Betriebsweise immer hoch reaktive Bestandteile im nicht behandelten Volumenanteil des Produkts und der Effekt der Stabilisierung ist schlechter als bei einem Verfahren mit Dosierung von Stabilisierungsmitteln.

Solche Verfahren wurden auch beschrieben mit Verwendung von Agarose-Gelen in einem Festbett (A. Jany, Filtrationstechnisches Symposium; Freising, 2006), oder unter Verwendung von Kunststoffgranulaten in einem durch Maschengewebe abgeschlossenen, flüssigkeitsdurchströmten Käfig, wie z.B. beschrieben in der Offenlegungsschrift DE 10 2004 041 528 A1.

Unter Berücksichtigung des beschriebenen Stands der Technik liegt der Erfindung die Aufgabe zugrunde, eine Stabilisierung zu ermöglichen, die eine Behandlung der Produkte im Vollstrom ebenso gewährleistet wie die Möglichkeit einer kontinuierlichen Betriebsweise.

Diese Aufgabe wird gelöst durch eine Vorrichtung mit den Merkmalen des Patentanspruchs 1. Um eine kontinuierliche Stabilisierung zu gewährleisten, werden entweder mindestens drei solche gleichartige Filtereinheiten bereit gestellt oder mindestens vier Einheiten, die in zwei Gruppen von mindestens zwei Filtereinheiten zusammengefasst sind. Dadurch entsteht eine Kombination aus je zwei im Wechsel betriebenen Einheiten aus mindestens je zwei Filtereinheiten. Dabei wird aus der jeweils als Stapel- und Vorlagebehälter verwendeten Einheit das Stabilisierungsmittel in den Strom des nicht stabilisierten Produktes dosiert. Diese Dosage kann in Abhängigkeit der erforderlichen Kontaktzeit des Stabilisierungsmittels vor einer Kontaktstrecke erfolgen.

Vorteilhaft ist es, wenn das Gehäuse als Rohr oder Kessel ausgebildet ist.

Das Gehäuse hat einen Filtereinsatz, der so im Gehäuse angeordnet ist, dass Flüssigkeit von außen durch eine Rohrleitung in das innere des Filtereinsatzes geleitet werden kann und diese Flüssigkeit nur durch die Öffnungen des Filters zunächst in den Zwischenraum zwischen Filtereinsatz und Gehäuse strömt und anschließend über einen Auslass aus dem Gehäuse abfließt.

Der Filtereinsatz hat vorzugsweise eine Spalt- oder Maschenweite von 10 bis 250 µm.

Eine vorteilhafte Ausführungsvariante sieht vor, dass jede Filtereinheit mit einem Rührwerk versehen ist.

Weiterhin wird vorgeschlagen, dass jede Filtereinheit mit einer Vorrichtung für die Umwälzung einer Suspension, bestehend aus einer Pumpe, einem Zulaufanschluss und einem Rücklaufanschluss, versehen ist.

Vorteilhaft ist es, wenn jede Filtereinheit mit einer Vorrichtung für die Umwälzung von Gas, bestehend aus einer Pumpe, einem Anschluss zum Austritt des Gases und einem Anschluss zum Eintritt des Gases versehen ist.

Weiterhin kann die Filtereinheit auch einen Anschluss für das Einblasen eines Gases aufweisen.

Die der Erfindung zu Grunde liegende Aufgabe wird auch mit einem Verfahren gelöst, das die Merkmale des Patentanspruchs 8 aufweist. Bei einem derartigen Verfahren werden mindestens drei gleichartig aufgebaute Filtereinheiten verwendet und das in der nicht als Vorlagegefäß oder Filter dienenden Filtereinheit befindliche Behandlungsmittel wird einer Regeneration unterzogen.

Es können auch mindestens vier Filtereinheiten in mindestens zwei Gruppen mit mindestens je zwei Filtereinheiten verwendet werden, wobei die Gruppen wechselweise zur Behandlung des Produktes verwendet werden und das Behandlungsmittel der jeweils anderen Gruppe eine Regeneration unterzogen wird. Eine Ausführungsvariante sieht hierbei vor, dass das Behandlungsmittel am Ende der Regeneration derart suspendiert wird, dass in der als Vorlagegefäß dienenden Filtereinheit ein Gasraum verbleibt.

Als Alternative wird vorgeschlagen, dass das Behandlungsmittel mittels einer Vorrichtung, bestehend aus einer Pumpe, einem Zulaufanschluss und einem Rücklaufanschluss, umgewälzt wird.

Weiterhin wird vorgeschlagen, dass das Behandlungsmittel durch das Einblasen eines Gases in Suspension gehalten werden kann.

Verschiedene Ausführungsbeispiele für erfindungsgemäße Vorrichtungen und zur Darstellung des erfindungsgemäßen Verfahrens sind in der Zeichnung dargestellt. Es zeigt
- Figur 1: einen prinzipiellen Aufbau einer Filtereinheit,
- Figur 2: schematisch den Aufbau einer Vorrichtung mit drei Filterein- heiten,
- Figur 3: schematisch den Aufbau einer Vorrichtung mit vier Filterein- heiten und
- Figur 4: schematisch den Aufbau einer Vorrichtung mit zwei Filterein- heiten.

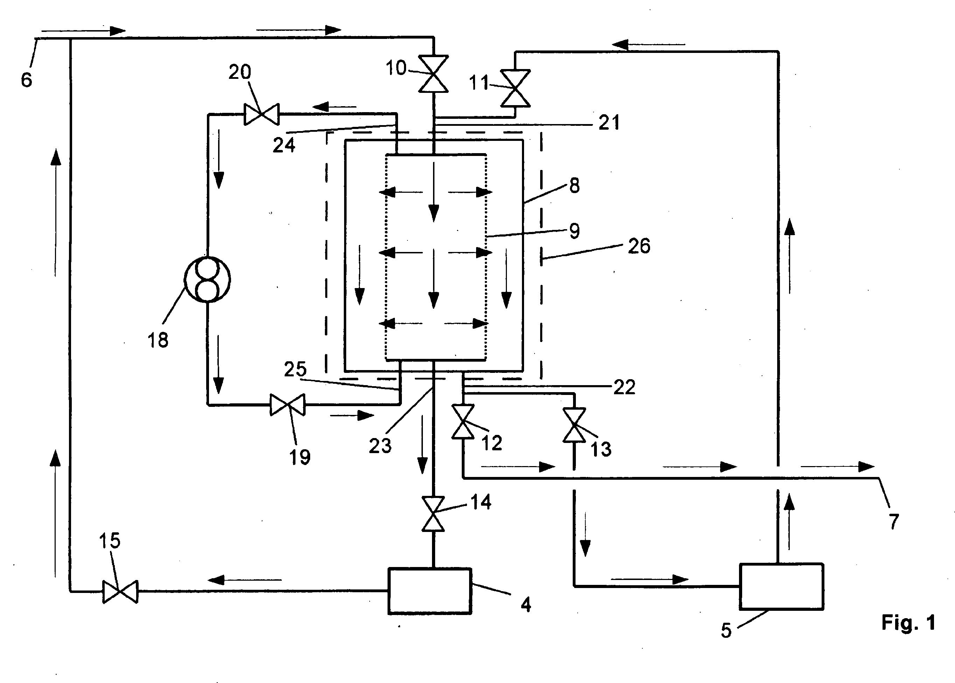

Fig. 1 zeigt beispielhaft den Aufbau einer Filtereinheit 26, die typischerweise jeweils aufgebaut aus einem Gehäuse 8, ausgebildet als Rohr oder Kessel, einem oder mehreren dagegen flüssigkeitsdicht abgedichteten Filtereinsätzen 9, einem Zulauf 21 des unbehandelten Produktes zu den Filtereinsätzen 9, einem Ablauf 22 des behandelten Produktes aus dem Gehäuse und einem Ablauf 23 für die Entnahme des Behandlungsmittels zur Dosiervorrichtung 4.

Je nach Ausführungsform können ein Rührwerk oder Anschlüsse 24, 25 für die Umwälzung der Suspension oder die Umwälzung von Gas hinzukommen.

Die Zugabe des Behandlungsmittels erfolgt wie in Fig. 1 dargestellt im Zulauf 6 zur Vorrichtung. Über die Ventile 10, 14 wird die Versorgung der jeweils als Filter aktiven Filtereinheit und die Entnahme des Behandlungsmittels aus der jeweils als Vorlagebehälter dienenden Filtereinheit gesteuert.

Die Größenauslegung der einzelnen Filtereinheiten erfolgt dergestalt, dass das dosierte Stabilisierungsmittel in einer Menge aufgenommen werden kann, die sich aus der Anzahl der verfügbaren Filtereinheiten und deren Anordnung so ergibt, dass mindestens eine Filtereinheit 26 mit regeneriertem Stabilisierungsmittel zur Behandlung des Produktes zur Verfügung steht.

Die Filtrationscharakteristik des Filtereinsatzes 9 wird anhand der Art und der Partikelgröße des verwendeten Behandlungsmittels festgelegt. Gängige Rückhalteraten für diese Anwendungen liegen zwischen 10 und 250 µm, typischerweise zwischen 30 und 80 µm.

Als Filtermedium für den Filtereinsatz 9 können Spaltrohre, Gewebe, Vliese, Filtermembranen oder poröse Sintermaterialien eingesetzt werden.

Im Beispiel der Stabilisierung von Bier können als Filtermedium Spaltrohre oder Metallgewebe mit einer Rückhalterate von 30 - 70 µm eingesetzt werden.

Stabilisierungsmittel können aufgrund der verwendeten Korngrößen und der Dichteunterschiede zur Flüssigkeit zur Sedimentation neigen. Dieser Sedimentation kann durch geeignete Maßnahmen entgegengewirkt werden. So ist es möglich, durch die Verwendung eines Rührwerks, einer Zwangsumwälzung der Suspension oder einer Durchperlung mit einem geeigneten Gas der Sedimentation entgegenzuwirken.

Bei der Durchperlung mit Gas besteht zur Vermeidung eines größeren Gasverbrauchs eine bevorzugte Ausführungsform darin, im Kopfraum der Filtereinheit 26 über den Anschluss 24 einen konstanten Volumenstrom des Gases über z.B. eine Schlauchpumpe 18 abzusaugen und über den Anschluss 25 im unteren Bereich des Filtereinsatzes 9 über ein perforiertes Ringrohr wieder zuzugeben.

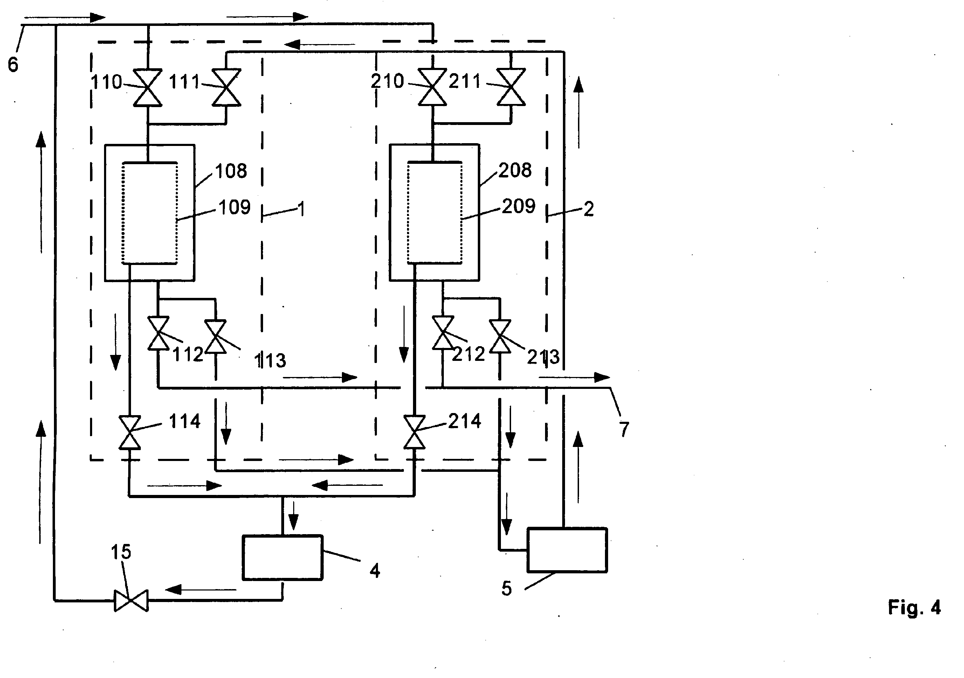

In Fig. 4 wird eine Vorrichtung mit zwei Filtereinheiten 1 und 2 dargestellt, die erfindungsgemäß wie folgt betrieben wird:

Bei Betriebsbeginn ist z.B. die Filtereinheit 1 gefüllt mit einem bestimmten Volumen der Suspension des regenerierten Stabilisierungsmittels, die Filtereinheit 2 ist leer. Die Ventile 110 bis 114 und 210 bis 214 sind geschlossen. Sobald über die Leitung 6 unbehandeltes Produkt der Anlage zugeführt wird, werden die Ventile 114 und 15 geöffnet und über die Dosiervorrichtung 4 wird ein Volumenstrom der Stabilisierungsmittelsuspension in den Strom des unbehandelten Produktes dosiert. Mit Beginn der Dosage werden die Ventile 210 und 212 geöffnet. Das Produkt tritt über das Ventil 210 in den Filtereinsatz 209 ein, dort wird das Stabilisierungsmittel zurückgehalten. Das behandelte Produkt tritt durch den Filtereinsatz 209 hindurch, verlässt über das Ventil 212 das Gehäuse 208 und wird über die Leitung 7 abgeführt. Ist die gesamte Suspension aus der Filtereinheit 1 in den Produktstrom dosiert und im Filtereinsatz 209 wieder aus dem Produktstrom abgetrennt worden, so werden die Ventile 15, 114 und 210 geschlossen. Das restliche Produktvolumen im Filtereinsatz 209 und im Gehäuse 208 wird mittels eines geeigneten Mediums in die Leitung 7 verdrängt. Dazu wird das Ventil 211 geöffnet und das Medium aus der Regeneriereinheit 5 in den Filtereinsatz 209 geführt. Ist das Produkt verdrängt, wird das Ventil 213 geöffnet und Ventil 212 geschlossen. Damit wird ein Kreislauf von der Regenerieranlage 5 über das Gehäuse 208 mit dem Filtereinsatz 209 zurück zur Regenerieranlage 5 hergestellt.

Die Regenerierung des Stabilisierungsmittels erfolgt gemäss Angaben des Herstellers, die dazu erforderlichen Medien werden von der Regeneriereinheit 5 bereitgestellt. Nach Ende der Regenerierung ist der Filtereinsatz 209 gefüllt mit einer Suspension des regenerierten Stabilisierungsmittels, der Filtereinsatz 109 ist leer. Die Ventile 211 und 213 werden geschlossen.

Die Wiederaufnahme der Produktion erfolgt nun dergestalt, dass die Ventile 214 und 15 geöffnet und über die Dosiervorrichtung 4 ein bestimmter Volumenstrom der Stabilisierungsmittelsuspension aus dem Filtereinsatz 209 in den Strom des unbehandelten Produktes dosiert wird. Mit Beginn der Dosage werden die Ventile 110 und 112 geöffnet, das Produkt tritt in den Filtereinsatz 109 ein, dort wird das Stabilisierungsmittel zurückgehalten. Das behandelte Produkt tritt durch den Filtereinsatz 109 hindurch, verlässt über das Ventil 112 das Gehäuse 108 und wird über die Leitung 7 abgeführt. Die Regenerierung erfolgt dann in analoger Form wie für Filtereinheit 2 beschrieben.

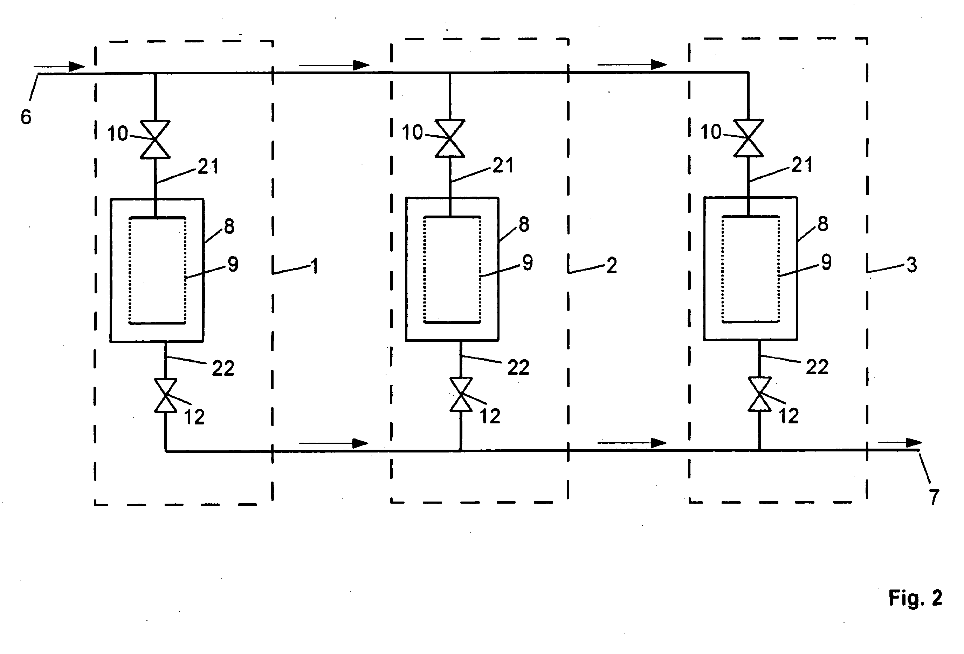

Gemäß Fig. 1 und 2 erfolgt der Betrieb einer Vorrichtung mit drei Filtereinheiten zum Beispiel dergestalt, dass die Filtereinheit 1 bei Beginn des Betriebes eine bestimmte Menge des regenerierten Stabilisierungsmittels enthält. Dieses wird über die Dosiervorrichtung 4 dem Produktstrom beigegeben und in der Filtereinheit 2 in der beschriebenen Weise wieder aus dem Produkt abgetrennt. In der Filtereinheit 3 erfolgt in dieser Zeit die Regenerierung des in einem vorhergehenden Prozessschritts benutzten Stabilisierungsmittels mit Hilfe der Regeneriereinheit 5. Ist die Menge an Stabilisierungsmittel in der Filtereinheit 1 vollständig dosiert und damit in die Filtereinheit 2 überführt, wird der Produktstrom in der beschriebenen Weise über die Filtereinheit 1 geleitet und das in der Filtereinheit 3 vorhandene, regenerierte Stabilisierungsmittel in den Produktstrom dosiert. Das in der Filtereinheit 2 befindliche Stabilisierungsmittel wird in dieser Zeit mit Hilfe der Regeneriereinheit 5 regeneriert. Nach vollständiger Dosage des in der Filtereinheit 3 vorhandenen Suspensionsvolumens und nach der Abtrennung des Stabilisierungsmittels in der Filtereinheit 1 erfolgt eine weitere Umstellung. Das jetzt in der Filtereinheit 2 vorhandene, regenerierte Stabilisierungsmittel wird in den Produktstrom dosiert und in der Filtereinheit 3 abgetrennt. Das in der Filtereinheit 1 vorhandene Stabilisierungsmittel wird nun regeneriert.

Nach Abschluss dieses Schrittes liegt die gleiche Konfiguration wie am Beginn des Gesamtprozesses vor und die Abfolge der Schritte kann beliebig wiederholt werden. Mit dieser Verfahrensweise ist eine kontinuierliche Stabilisierung von 100 % des Produktstroms mit exakt der in der Produktspezifikation vorgegebenen Menge an Stabilisierungsmittel möglich.

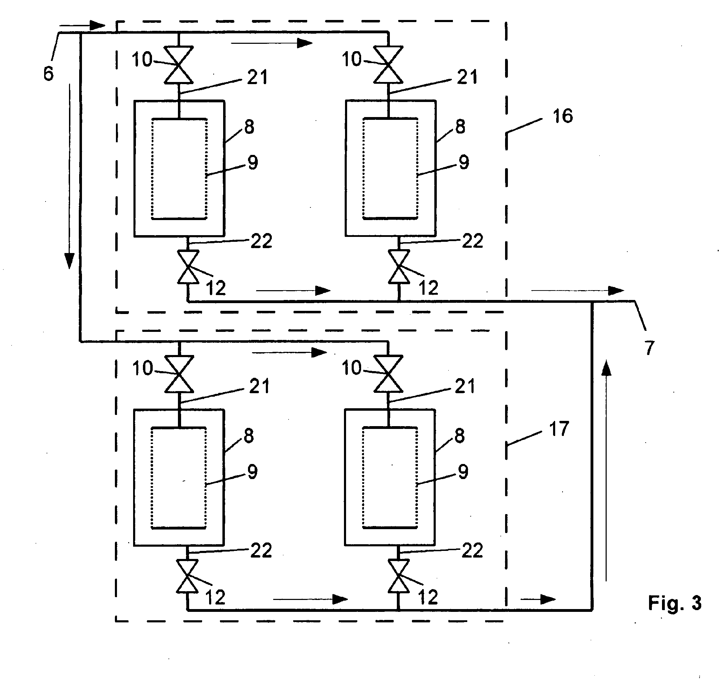

Der Betrieb einer Vorrichtung mit einer Kombination aus zwei Einheiten 16, 17 mit je zwei Filtereinheiten erfolgt gemäß Fig. 3 analog. Die Umschaltung erfolgt hier allerdings dergestalt, dass nach Erschöpfung der Einheit 16 auf die Einheit 17 umgeschaltet wird und die in der Einheit 16 vorhandene Menge an Stabilisierungsmittel regeneriert wird.

Die Abfolge der Dosierung erfolgt dann beispielsweise in der Reihenfolge:
Einheit 16, erste Filtereinheit nach Einheit 16, zweite Filtereinheit Einheit 17, erste Filtereinheit nach Einheit 17, zweite Filtereinheit
Einheit 16, zweite Filtereinheit nach Einheit 16, erste Filtereinheit usw. Mit dieser Verfahrensweise ist eine kontinuierliche Stabilisierung von 100 % des Produktstroms mit exakt der in der Produktspezifikation vorgegebenen Menge an Stabilisierungsmittel möglich.

Die Regenerierung des Behandlungsmittels erfolgt gemäß den jeweiligen Vorschriften des Herstellers. Am Ende der Regenerierung wird das regenerierte Behandlungsmittel in einer ausreichenden Menge Flüssigkeit so suspendiert, dass in der als Vorlagebehälter dienenden Filtereinheit ein Gasraum verbleibt.

## Patentansprüche

1. Vorrichtung zur kontinuierlichen Behandlung von Flüssigkeiten mit mindestens zwei Filtereinheiten [26] und mindestens einer Dosiervorrichtung [4] die mit beiden Filtereinheiten [26] in Verbindung steht, wobei die zwei Filtereinheiten [26] jeweils ein Gehäuse [8] und einen Filtereinsatz [9] aufweisen, die zwischen sich einen Zwischenraum begrenzen, eine Entnahmevorrichtung [23], die aus dem Filtereinsatz [9] und durch das Gehäuse [8] führt, einen Zulauf [21], der durch das Gehäuse [8] und in den Filtereinsatz [9] führt, und einen Ablauf [22], der aus dem Zwischenraum führt, wobei die aus dem Filtereinsatz [9] herausführende Entnahmevorrichtung [23] jeder Filtereinheit über ein Ventil [14] mit der Dosiervorrichtung [4] in Verbindung steht und die Dosiervorrichtung [4] über ein Ventil [15] mit dem Zulauf [6] der Vorrichtung in Verbindung steht und die Vorrichtung mindestens drei gleichartig aufgebaute Filtereinheiten [26] aufweist.

2. Vorrichtung nach Anspruch 1, ***dadurch gekennzeichnet, dass*** das Gehäuse [8] als Rohr oder Kessel ausgebildet ist.

3. Vorrichtung nach einem der vorangegangenen Ansprüche, ***dadurch gekennzeichnet, dass*** der Filtereinsatz [9] eine Spalt- oder Maschenweite von 10-250 µm aufweist.

4. Vorrichtung nach einem der vorangegangenen Ansprüche, ***dadurch gekennzeichnet, dass*** jede Filtereinheit [26] mit einem Rührwerk versehen ist.

5. Vorrichtung nach einem der vorangegangenen Ansprüche, ***dadurch gekennzeichnet, dass*** jede Filtereinheit [26] mit einer Vorrichtung für die Umwälzung der Suspension, bestehend aus einer Pumpe [18], einem Zulaufanschluss [24] und einem Rücklaufanschluss [25], versehen ist.

6. Vorrichtung nach einem der vorangegangenen Ansprüche, ***dadurch gekennzeichnet, dass*** jede Filtereinheit [26] mit einer Vorrichtung für die Umwälzung von Gas, bestehend aus einer Pumpe [18], einem Anschluss [24] zum Austritt des Gases und einem Anschluss [25] zum Eintritt des Gases versehen ist.

7. Vorrichtung nach einem der vorangegangenen Ansprüche, ***dadurch gekennzeichnet, dass*** jede Filtereinheit [26] mit einem Anschluss für das Einblasen eines Gases versehen ist.

8. Verfahren zur kontinuierlichen Behandlung von Flüssigkeiten mittels in die Flüssigkeit dosierter, in der Flüssigkeit unlöslicher Behandlungsmittel, insbesondere Stabilisierungsmittel, wobei das Behandlungsmittel aus einer von mindestens zwei gleichartig aufgebauten Filtereinheiten [26], die wechselweise als Vorlagegefäss und zur Rückhaltung des Behandlungsmittels dienen, in das zu behandelnde Produkt [6] dosiert und in der als Filter dienenden zweiten Filtereinheit [26] wieder aus dem Produkt abgetrennt wird und die Verwendung der Filtereinheiten als Vorlagegefäss und als Filter umgekehrt wird, ***dadurch gekennzeichnet, dass*** mindestens drei gleichartig aufgebaute Filtereinheiten [26] verwendet werden, wobei das in der nicht als Vorlagegefäß und nicht als Filter dienenden Filtereinheit befindliche Behandlungsmittel einer Regeneration unterzogen wird.

9. Verfahren nach Anspruch 8, ***dadurch gekennzeichnet, dass*** das Behandlungsmittel am Ende der Regeneration derart suspendiert wird, dass in der als Vorlagegefäß dienenden Filtereinheit [26] ein Gasraum verbleibt.

10. Verfahren nach einem der Ansprüche 8 bis 9, ***dadurch gekennzeichnet, dass*** das Behandlungsmittel mittels einer Vorrichtung, bestehend aus einer Pumpe [18], einem Zulaufanschluss [24] und einem Rücklaufanschluss [25], umgewälzt wird.

11. Verfahren nach einem der Ansprüche 8 bis 9, ***dadurch gekennzeichnet, dass*** das Behandlungsmittel durch das Einblasen eines Gases in Suspension gehalten wird.

12. Verfahren nach einem der Ansprüche 8 bis 11, ***dadurch gekennzeichnet, dass*** die Dosierung des Behandlungsmittels am Beginn einer Verweilstrecke erfolgt.

## Claims

1. An apparatus for the continuous processing of liquids with at least two filter units [26] and with at least one dosing device [4], which communicates with said two filter units [26], said two filter units [26] comprising one housing [8] and one filter insert [9] each, said housing and filter insert defining a space between the two of them, one withdrawal device [23] which leads out of said filter insert [9] and through said housing [8], one inlet [21], which leads through said housing [8] and into said filter insert [9], and one outlet [22], which leads out of said space, the withdrawal device [23] of each filter unit, which leads out of said filter insert [9] communicating with said dosing device [4] through a valve [14] and said dosing device [4] communicating with the inlet [6] of the apparatus through a valve [15] and the apparatus comprising at least three filter units [26] built according to the same principle.

2. The apparatus as set forth in claim 1, ***characterized in that*** the housing [8] is configured to be a tube or a thank.

3. The apparatus as set forth in any one of the previous claims, ***characterized in that*** the filter insert [9] comprises a gap or mesh width of 10-250 µm.

4. The apparatus as set forth in any one of the previous claims, ***characterized in that*** each filter unit [26] is provided with an agitator.

5. The apparatus as set forth in any one of the previous claims, ***characterized in that*** each filter unit [26] is provided with a device for circulating the suspension, consisting of a pump [18], of an inlet fitting [24] and of a return line fitting [25].

6. The apparatus as set forth in any one of the previous claims, ***characterized in that*** each filter unit [26] is provided with a gas circulation device, consisting of a pump [18], of a gas discharge fitting [24] and of a gas inlet fitting [25].

7. The apparatus as set forth in any one of the previous claims, ***characterized in that*** each filter unit [26] is provided with a fitting for injecting a gas.

8. A method for continuously processing liquids by means of processing agents that are dosed in said liquid and insoluble therein, more specifically stabilizing agents, said processing agent being dosed out of one of at least two filter units [26] that are built according to the same principle and alternately serve as a collector tank and for retaining the processing agent and into the product [6] to be processed and being again isolated from the product in the second filter unit [26] serving as a filter and the use of the filter units as a collector tank and as a filter being inversed, ***characterized in that*** at least three filter units [26] built according to the same principle are used, the processing agent contained in the filter unit which does not serve as a collector tank nor as a filter being subjected to regeneration.

9. The method as set forth in claim 8, ***characterized in that*** the processing agent is suspended in such a manner at the end of the regeneration process that a gas volume remains in the filter unit [26] serving as the collector tank.

10. The method as set forth in any one of the claims 8 through 9, ***characterized in that*** the processing agent is circulated by means of a device consisting of a pump [18], of an inlet fitting [24] and of a return line fitting [25].

11. The method as set forth in any one of the claims 8 through 9, ***characterized in that*** the processing agent is maintained in suspension by injecting a gas.

12. The method as set forth in any one of the claims 8 through 11, ***characterized in that*** the dosing of the processing agent occurs at the beginning of a stagnation path.

## Revendications

1. Dispositif de traitement continu de liquides avec au moins deux unités de filtres [26] et avec au moins un dispositif de dosage [4] qui communique avec les deux unités de filtres [26], ces deux unités de filtres [26] comportant chacune un boîtier [8] et un insert de filtre [9] délimitant entre eux un espace, un dispositif de prélèvement [23] qui mène hors de l'insert de filtre [9] et traverse le boîtier [8], un conduit d'amenée [21] qui traverse le boîtier [8] et mène dans l'insert de filtre [9] et un conduit d'évacuation [22] qui mène hors de l'espace, le dispositif de prélèvement [23] menant hors de l'insert de filtre [9] de chaque unité de filtre communiquant avec le dispositif de dosage [4] par l'intermédiaire d'une valve [14] et le dispositif de dosage [4] communiquant avec le conduit d'amenée [6] du dispositif par l'intermédiaire d'une valve [15] et le dispositif comportant au moins trois unités de filtre [26] de construction similaire.

2. Dispositif selon la revendication 1, ***caractérisé en ce que*** le boîtier [8] est conformé en forme de tube ou de réservoir.

3. Dispositif selon l'une quelconque des revendications précédentes, ***caractérisé en ce que*** l'insert de filtre [9] comporte une largeur de fente ou de maille comprise entre 10 et 250 µm.

4. Dispositif selon l'une quelconque des revendications précédentes, ***caractérisé en ce que*** chaque unité de filtre [26] est munie d'un agitateur.

5. Dispositif selon l'une quelconque des revendications précédentes, ***caractérisé en ce que*** chaque unité de filtre [26] est munie d'un dispositif pour la circulation de la suspension qui est constitué d'une pompe [18], d'un raccord [24] pour le conduit d'amenée et d'un raccord [25] pour le conduit de retour.

6. Dispositif selon l'une quelconque des revendications précédentes, ***caractérisé en ce que*** chaque unité de filtre [26] est munie d'un dispositif pour la circulation de gaz qui est constitué d'une pompe [18], d'un raccord [24] pour la sortie du gaz et d'un raccord [25] pour l'entrée du gaz.

7. Dispositif selon l'une quelconque des revendications précédentes, ***caractérisé en ce que*** chaque unité de filtre [26] est munie d'un raccord pour l'injection d'un gaz.

8. Procédé pour le traitement continu de liquide au moyen d'agents de traitement dosés dans le liquide et insolubles dans celui-ci, notamment de stabilisateurs, l'agent de traitement contenu dans une parmi au moins deux unités de filtre [26] de construction similaire et servant alternativement de récipient et de rétenteur de l'agent de traitement étant dosé dans le produit [6] destiné à être traité et étant séparé du produit dans la deuxième unité de filtre [26] servant de filtre et l'utilisation des unités de filtre en tant que récipient et en tant que filtre étant inversée, ***caractérisé en ce que*** au moins trois unités de filtre [26] de construction similaire sont utilisées, l'agent de traitement contenu dans l'unité de filtre ne servant ni de récipient ni de filtre étant soumis à une régénération.

9. Procédé selon la revendication 8, ***caractérisé en ce que*** l'agent de traitement est suspendu de telle manière à la fin de la régénération qu'un volume de gaz subsiste dans l'unité de filtre [26] servant de récipient.

10. Procédé selon l'une quelconque des revendications 8 à 9, ***caractérisé en ce que*** l'agent de traitement est mis en circulation au moyen d'un dispositif qui est constitué d'une pompe [18], d'un raccord [24] pour le conduit d'amenée et d'un raccord [25] pour le conduit de retour.

11. Procédé selon l'une quelconque des revendications 8 à 9, ***caractérisé en ce que*** l'agent de traitement est maintenu en suspension par l'injection d'un gaz.

12. Procédé selon l'une quelconque des revendications 8 à 11, ***caractérisé en ce que*** le dosage de l'agent de traitement s'opère au début d'un trajet de stagnation.
